# EUROPÄISCHE PATENTANMELDUNG

(11) **EP 1 657 107 A1**
(43) Veröffentlichungstag der Anmeldung: **17.05.2006**
(21) Anmeldenummer: 05023480.6
(22) Anmeldetag: 27.10.2005
(51) Int. Cl.: B60L 13/10, B60M 3/04

(54) **Vorrichtung mit wenigstens einem Langstator-Linearantrieb zum Betreiben von Magnetschwebefahrzeugen**

(30) Priorität: 10.11.2004 DE 102004054918
(71) Anmelder: Transrapid International GmbH & Co.KG, 10587 Berlin (DE)
(72) Erfinder: Fischperer, Rolf, 10623 Berlin (DE)
(74) Vertreter: Freiherr von Schorlemer, Reinfried

(57) **Zusammenfassung**

Die Erfindung betrifft eine Vorrichtung zum Betreiben eines Magnetschwebefahrzeugs mittels einer wenigstens einen Langstator-Linearantrieb aufweisenden Vorrichtung. Die Linearantriebe sind längs eines Fahrwegs in einzelne Antriebsbereiche (A) unterteilt, in denen jeweils nur ein Fahrzeug (7) verkehren kann. Zur Ermöglichung von unterschiedlichen Linienfolgen für die Fahrzeuge (7) bzw. Abständen zwischen den Fahrzeugen (7) sind die Bereichsgrenzen (B) zwischen wenigstens zwei, in Fahrtrichtung aufeinander folgenden Antriebsbereichen (A1, A2) veränderbar ausgebildet (Fig. 3b).

## Beschreibung

Die Erfindung betrifft eine Vorrichtung zum Betreiben von Magnetschwebefahrzeugen gemäß der im Obergriff des Anspruchs 1 angegebenen Gattung.

Bei bekannten Verfahren und Vorrichtungen dieser Art werden Langstator-Linearantriebe verwendet (z. B. US-PS 5 053 654, DE 199 22 441 A1), die als Primärteil einen längs eines gegebenen Fahrwegs verlegten Langstator mit wenigstens einer Langstatorwicklung enthalten (z. B. US-PS 4 665 329, US-PS 4 728 382), in der ein in Bewegungsrichtung des zu betreibenden Fahrzeugs fortschreitendes, elektromagnetisches Wanderfeld erzeugt wird. Als Sekundärteil dient dagegen eine am Fahrzeug montierte, meistens über dessen ganze Länge erstreckte Erregeranordnung (z. B. DE 34 10 119 A1), die aus gleichzeitig als Tragmagnete wirkenden Elektromagneten zusammengesetzt ist. Die Langstatorwicklung wird gewöhnlich in eine Vielzahl von Wicklungsabschnitten unterteilt, die in Fahrtrichtung unmittelbar hintereinander liegen, durch Wechselstellen elektrisch voneinander getrennt sind und mit Längen von z. B. 1000 m bis 2000 m zwar vergleichsweise kurz, aber erheblich länger als das z. B. bis 250 m lange Fahrzeug sind. Parallel zum Fahrweg ist außerdem eine Mehrzahl von vergleichsweise langen, z. B. ca. 20 km langen Streckenkabeln verlegt, die an einem Ende (= Einfachspeisung) oder an beiden Enden (= Doppelspeisung) an sogenannte Unterwerke angeschlossen sind, in denen die zur Strom- und Spannungsversorgung der Langstatorwicklung erforderlichen Spannungsquellen in Form von Umrichtern, lokale Steuermittel und dgl. installiert sind. Zur Begrenzung des Energieverbrauchs und der wirksamen Impedanz werden dabei immer nur diejenigen Wicklungsabschnitte, in denen sich das Fahrzeug gerade befindet, mit Strom versorgt, indem die einzelnen Wicklungsabschnitte mit Hilfe von Schalteinrichtungen entsprechend der Fortbewegung der Fahrzeuge einzeln und nacheinander mit zugeordneten Streckenkabeln und Spannungsquellen verbunden werden. Entsprechende Umschaltungen können für die Verbindungen der Streckenkabel mit den Spannungsquellen vorgesehen werden (DE 29 32 764 A1). Beim Betrieb derartiger Magnetschwebefahrzeuge liefern die Spannungsquellen Spannungen, die im wesentlichen gleich der Summe aus der vom Fahrzeug induzierten Spannung (Polradspannung), dem Spannungsabfall am jeweiligen Wicklungsabschnitt und dem Spannungsabfall am zugehörigen Teil des Streckenkabels sind.

Aufgrund der beschriebenen Betriebsweise ist der Antrieb für das Magnetschwebefahrzeug in eine Mehrzahl von Antriebsbereichen unterteilt, die in Richtung des Fahrwegs aufeinander folgen. Jeder Antriebsbereich enthält wenigstens ein Streckenkabel, diesem zugeordnete Wicklungsabschnitte und wenigstens eine an das Streckenkabel angeschlossene Spannungsquelle für die Energieversorgung. Dabei kann sich aus praktischen und technischen Gründen in jedem Antriebsbereich stets nur ein Magnetschwebefahrzeug befinden, d. h. ein nachfolgendes Fahrzeug darf erst dann in einen Antriebsbereich einfahren, wenn ein vorausfahrendes Fahrzeug diesen Antriebsbereich verlassen hat. Das hat zur Folge, daß der Fahrtakt, die Linienfolgen bzw. Abstände der Fahrzeuge sowie der Fahrplan mit der höchsten zulässigen Fahrzeugfolge durch die Längen der Antriebsbereiche fest vorgegeben und nach dem Bau einer Magnetschwebebahn nicht mehr veränderbar sind. Daher werden Vorrichtungen der beschriebenen Art bisher mit Linienfolgen betrieben, die für alle Magnetschwebefahrzeuge identisch sind. Mehrere gleichzeitig auf dem Fahrweg verkehrende Fahrzeuge weisen infolgedessen stets dieselben zeitlichen Abstände voneinander auf.

Bei der praktischen Anwendung derartiger Magnetschwebebahnen hat sich das Bedürfnis ergeben, auf demselben Fahrweg Fahrzeuge mit unterschiedlichen Linienfolgen verkehren zu lassen. Insbesondere sollen die Fahrzeuge an unterschiedlichen Haltestellen anhalten, unterschiedliche Geschwindigkeitsprofile aufweisen und z. B. alle zehn Minuten, in Bedarfsfällen aber auch alle fünf Minuten verkehren können.
Als Folge einer derartigen Betriebsweise muß es möglich sein, daß zwei Fahrzeuge an einigen Stellen des Fahrwegs größere Abstände voneinander haben und an anderen Stellen deutlich dichter aufeinander auffahren, als dies bei gleicher Linienfolge der Fall wäre. Mit den bisher bekannt gewordenen Vorrichtungen ist dies jedoch allenfalls dadurch möglich, daß dort, wo die Fahrzeuge dichter als gewöhnlich aufeinander auffahren, die Länge der Antriebsbereiche entsprechend reduziert wird, damit zwei Fahrzeuge auch dann, wenn sie den kleinsten möglichen Abstand voneinander aufweisen, noch mit je einem zugeordneten Antriebsbereich betrieben werden können. Das ist angesichts der damit verbundenen, beträchtlich erhöhten Installationskosten und des Umstandes, daß ein Bedarf an ungleichmäßigen Linienfolgen meistens nur zeitweilig wie z. B. zu bestimmten Tageszeiten oder bei unvorhergesehenen Betriebsbedingungen besteht, in aller Regel nicht tragbar.

Das technische Problem der vorliegenden Erfindung besteht daher darin, die Vorrichtung der eingangs bezeichneten Gattung so auszubilden, daß unterschiedliche Abstände zwischen auf einem Fahrweg verkehrenden Fahrzeugen bzw. unterschiedliche Linienfolgen ohne wesentliche Änderungen der Hardware realisiert und die Fahrzeuge wenigstens bis auf die Hälfte derjenigen Abstände aneinander angenähert werden können, als bisher üblich ist. Außerdem soll es auch möglich sein, bereits installierte Linearantriebe nachträglich umzurüsten.

Zur Lösung dieser Aufgabe dienen die kennzeichnenden Merkmale des Anspruchs 1.

Die Erfindung geht wie bisher davon aus, daß jedem auf einem Fahrweg verkehrenden Fahrzeug an jedem Ort stets genau ein Antriebsbereich zugeordnet ist. Im Gegensatz zu den bisherigen Lösungen sind die Bereichsgrenzen dieser Antriebsbereiche jedoch nicht bestimmten Fahrwegabschnitten fest zugeordnet, sondern in Abhängigkeit von den Linienfolgen variabel, so daß z. B. für schnellere Fahrzeuge längere und für kürzere Fahrzeuge kürzere Antriebsbereiche zur Verfügung gestellt und daher auch die Abstände zwischen unterschiedlich schnellen Fahrzeugen dem Bedarf angepaßt werden können. Mit anderen Worten können die Antriebsbereiche längs des Fahrwegs ohne Änderung ihrer Anzahl unterschiedlich aufgeteilt werden. Die dazu erforderlichen konstruktiven Änderungen erfordern einen vergleichsweise geringen Aufwand und können ohne Leistungsverlust für den Antrieb vorgenommen werden. Außerdem bietet die Erfindung den Vorteil, daß sie sowohl auf Linearantriebe mit Einfachspeisung als auch auf Linearantriebe mit Doppelspeisung anwendbar ist.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 einen schematischen Querschnitt durch ein Magnetschwebefahrzeug und dessen Fahrweg im Bereich des Langstatormotors;
Fig. 2 schematisch eine bekannte, einen Langstator-Linearantrieb mit Einfachspeisung aufweisende Vorrichtung zum Betreiben eines Magnetschwebefahrzeugs nach Fig. 1;
Fig. 3a und 3b in schematischen Darstellungen ein erstes Ausführungsbeispiel für den Aufbau eines Antriebsbereichs nach dem Stand der Technik bzw. nach der Erfindung bei Anwendung der aus Fig. 2 ersichtlichen Einfachspeisung;
Fig. 4a, 4b und 4c in den Fig. 3a und 3b entsprechenden Darstellungen zwei weitere Ausführungsbeispiele für Antriebsbereiche mit Einfachspeisung; und
Fig. 5a, 5b bzw. 6a, 6b und 6c den Fig. 3a bis 4c entsprechende Darstellungen von drei weiteren Ausführungsbeispielen der Erfindung mit Doppelspeisung.

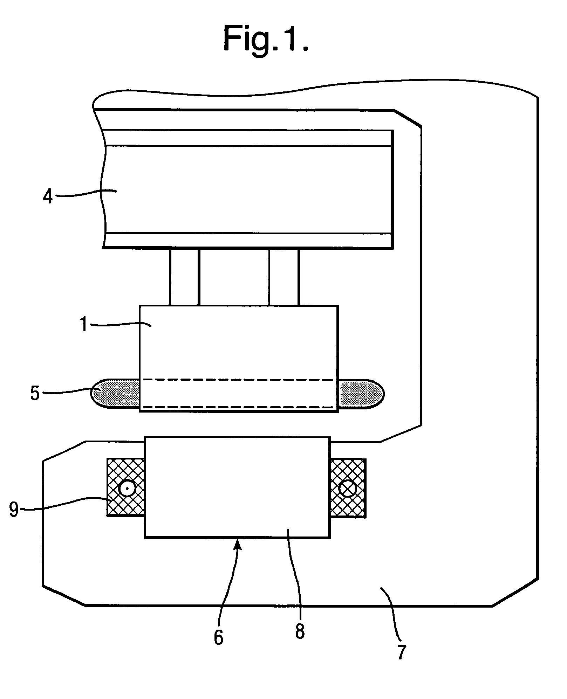

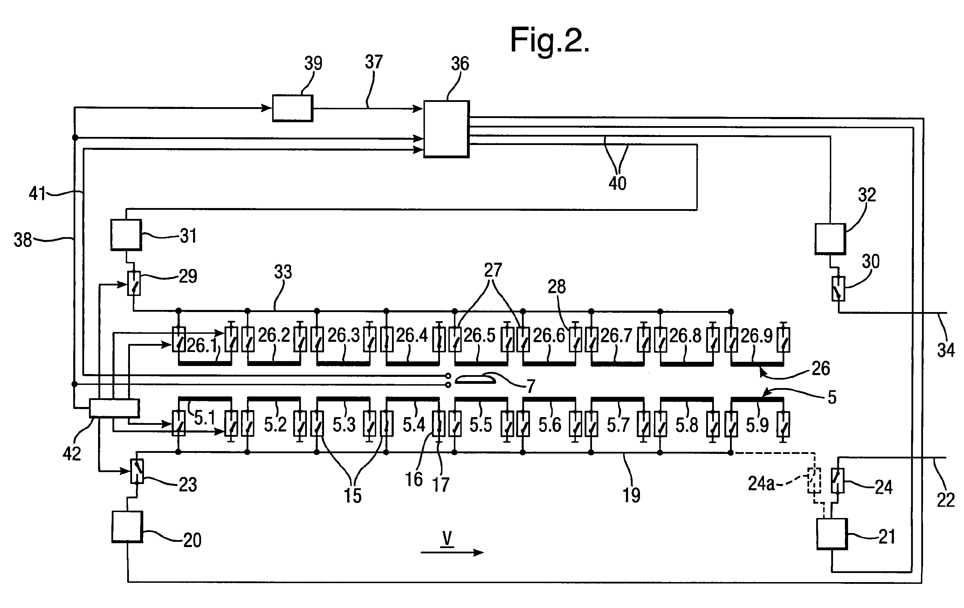

Bei einer Magnetschwebebahn mit einem synchronen Langstator-Linearmotor (Fig. 1 und 2) ist ein Statorblechpaket 1, das eine Vielzahl von aufeinander folgend angeordneten Nuten und Zähnen aufweist, ortsfest mit einem längs einer vorgegebenen Trasse errichteten Fahrweg 4 verbunden. In die Nuten des Statorblechpakets 1 ist eine Langstatorwicklung 5 in Form einer Drehstromwicklung eingelegt, die von einem Umrichter mit Drehstrom variabler Amplitude und Frequenz gespeist wird, wodurch sich in bekannter Weise eine fortschreitende Strombelagswelle längs des Langstator-Linearmotors ausbildet. Das Erregerfeld des Langstator-Linearmotors wird durch eine Erregeranordnung 6 erzeugt, die aus einer Vielzahl von an einem Fahrzeug 7 montierten, in dessen Längsrichtung verteilt angeordneten und gleichzeitig die Funktion des Tragens erfüllenden Magneten gebildet ist, die aus je einem Magnetkern 8 und einer Erregerwicklung 9 bestehen. Außerdem ist in der Regel auf beiden Seiten des Fahrwegs 4 je ein Statorblechpaket 1 mit je einer normalerweise dreiphasigen Langstatorwicklung 5 und jeweils einer zugeordneten Erregeranordnung 6 vorgesehen, wobei drei zu den drei Phasen R, S und T gehörende Einzelwicklungen jeweils abwechselnd hintereinander bzw. miteinander verschachtelt angeordnet und z. B. in Sternschaltung verbunden sind.

Zur Minimierung des Bedarfs an Blindleistung und Spannung des Langstatormotors wird jeweils nur dasjenige Teilstück der Langstatorwicklung 5 aktiviert (Fig. 2), das gerade von dem z. B. in Richtung des Fahrwegs (Pfeil v) bewegten Fahrzeug 7 befahren wird. Hierzu ist die Langstatorwicklung 5, wie Fig. 2 schematisch zeigt, in eine Vielzahl von in Längsrichtung des Fahrwegs unmittelbar aufeinanderfolgenden Wicklungsabschnitten 5.1 bis 5.9 unterteilt, die über je eine zugeordnete Schalteinrichtung 15 bzw. 16 an einen Sternpunkt 17 bzw. an ein Streckenkabel 19 angeschlossen werden können. In Fig. 2 trifft dies gerade für den Wicklungsabschnitt 5.4 zu. Im Ausführungsbeispiel ist ein Ende des Streckenkabels 19 an eine Spannungsquelle 20 angeschlossen. Die Spannungsquelle 20 besteht in der Regel aus wenigstens einem Umrichter und ist in einem Unterwerk untergebracht, in dem zumindest die zur Einspeisung des Stroms in die Wicklungsabschnitte 5.1 bis 5.9 erforderlichen Einrichtungen und ggf. auch alle Einrichtungen enthalten sind, die zur Steuerung und Überwachung des Fahrzeugs in dem vom Streckenkabel 19 gespeisten Bereich der Langstatorwicklung 5 benötigt werden. Weitere Spannungsquellen 21 sind an weitere, längs des Fahrwegs folgende Streckenkabel 22 angeschlossen, mit denen in entsprechender Weise nachfolgende Wicklungsabschnitte des Linearmotors gespeist werden können. Mit Hilfe von Schalteinrichtungen 23, 24 werden die verschiedenen Spannungsquellen 20, 21 immer dann aktiviert, wenn das Fahrzeug 7 in den von einer Spannungsquelle 20, 21 bzw. einem Streckenkabel 19, 22 definierten Abschnitt des Fahrwegs einfährt bzw. diesen verläßt.

Da nach Fig. 2 jedes Streckenkabel 19, 22 nur mit je einer Spannungsquelle 20 bzw. 21 verbunden ist, wird diese Betriebsart "Einfachspeisung" genannt. Alternativ sind aber auch Betriebsarten mit einer "Doppelspeisung" bekannt, bei denen jedes Strekkenkabel 19 an beiden Enden mit je einer Spannungsquelle 20 und 21 verbunden werden kann, wie in Fig. 2 durch eine gestrichelt dargestellte, zusätzliche Schalteinrichtung 24a angedeutet ist. Diese aus Gründen der Redundanz häufig bevorzugte Variante ermöglicht einerseits eine Reduzierung der in den Spannungsquellen installierten Leistung und hat andererseits beim Versagen einer Spannungsquelle zur Folge, daß das Fahrzeug 7 noch mit dem von der anderen Spannungsquelle gelieferten Strom betrieben werden.

Die in Fig. 2 dargestellten Wicklungsabschnitte 5.1 bis 5.9 dienen außerdem meistens nur zum Antrieb einer, z. B. der rechten Seite des Fahrzeugs 7. Weitere Wicklungsabschnitte 26.1 bis 26.9 einer Wicklung 26, Schalteinrichtungen 27, 28 bzw. 29 und 30, Spannungsquellen 31 und 32 sowie Streckenkabel 33, 34 dienen in entsprechender Weise zum Antrieb der linken Fahrzeugseite.

Zur Steuerung der beschriebenen Magnetschwebebahn dient ein Geschwindigkeits- bzw. Stromregler 36, dem über eine Leitung 37 ein Sollwert für die jeweils zu erzielende bzw. einzuhaltende Geschwindigkeit des Fahrzeugs 7 und über eine Leitung 38 oder auch per Funk das vom Fahrzeug 7 übermittelte aktuelle Ortssignal zugeführt werden. Die Sollwerte für die Geschwindigkeit sind beispielsweise in einem Sollwert-Speicher 39 abgelegt, dem ebenfalls das Ortssignal zugeführt wird und der einen für den jeweils befahrenen Wicklungsabschnitt vorgegebenen Geschwindigkeits- oder Strom-Sollwert abgibt.

Der Stromregler 36 liefert an Ausgängen 40 Sollwerte, die z. B. aus Spannungs-Sollwerten bestehen und den Spannungsquellen 20, 21, 31 und 32 zugeführt werden, um in diesen die an die Streckenkabel anzulegenden Spannungen zu erzeugen bzw. um in die Wicklungsabschnitte die zur Erzielung der Nenngeschwindigkeit erforderlichen Ströme einzuspeisen. Mittels des am Fahrzeug 7 ermittelten Geschwindigkeit-Istsignals, das in einer Leitung 41 erscheint, überprüft der Geschwindigkeitsregler 36 die Einhaltung der vorgeschriebenen Nenngeschwindigkeit.

Schließlich sind in Fig. 2 in vereinfachter Darstellung mit der Leitung 38 verbundene Steuermittel 42 angedeutet, mittels derer die verschiedenen Schalteinrichtungen 15, 16, 23, 24, (24a), 29 und 30 des aus Fig. 2 ersichtlichen Streckenabschnitts in Abhängigkeit von der Ist-Position des Fahrzeugs 7 in v-Richtung so gesteuert werden, daß stets nur die gerade befahrenen Wicklungsabschnitte und die zugehörigen Spannungsquellen an die verschiedenen Streckenkabel angeschlossen sind. Die Steuermittel 42 können wie die Spannungsquellen 20, 21 od. dgl. in den Unterwerken 20, 21 untergebracht werden.

Verfahren und Vorrichtungen der beschriebenen Art und ihre Funktion sind aus den Druckschriften DE-OS 29 32 764 A2, DE 30 06 382 C2, DE 33 03 961 A1, US-PS 4 665 329, US-PS 4 728 382 und US-PS 5 053 654 bekannt, die daher zur Vermeidung von Wiederholungen durch Bezugnahme auf sie zum Gegenstand der vorliegenden Offenbarung gemacht werden.

Bei der Vorrichtung nach Fig. 2 bilden das Streckenkabel 19, die mit diesem verbundene Spannungsquelle 20 und die an das Streckenkabel 19 anschließbaren Wicklungsabschnitte 5.1 bis 5.9 eine nachfolgend als "Antriebsbereich" bezeichnete Einheit. Da das Fahrzeug 7 nach Fig. 2 an beiden Längsseiten angetrieben wird, gehören diesem Antriebsbereich auch das Streckenkabel 33, die Spannungsquelle 31 und die Wicklungsabschnitte 26.1 bis 26.9 an.

Aufgrund der beschriebenen Betriebsweise eines Magnetschwebefahrzeugs kann in einem Antriebsbereich jeweils nur ein Magnetschwebefahrzeug verkehren. Dadurch hängt die Linienfolge von der Länge (z. B. 20 km) des von den Streckenkabeln 19 und 33 bedienten Teils des Fahrwegs und von der Geschwindigkeit der Fahrzeuge ab. Durch die vorliegende Erfindung wird dagegen die Möglichkeit geschaffen, die Fahrzeuge mit unterschiedlichen Linienfolgen auf dem Fahrweg fahren zu lassen. Dies wird nachfolgend anhand von vier Ausführungsbeispielen näher erläutert.

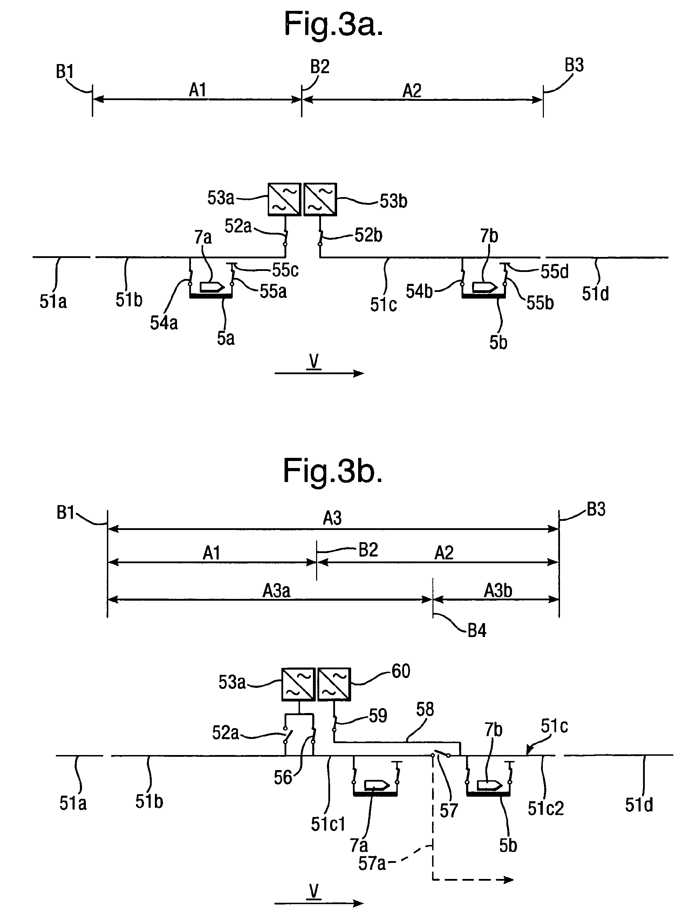

Fig. 3a zeigt schematisch eine bekannte Betriebsweise mit Einfachspeisung und fester Zuordnung der Spannungsquellen und Streckenkabel, wobei angenommen ist, daß sich Fahrzeuge 7a und 7b in Richtung des Pfeils v bewegen. Längs des Fahrwegs sind dazu im Ausführungsbeispiel jeweils vier hintereinander angeordnete Streckenkabel 51a bis 51d dargestellt. Jedes Streckenkabel (z. B. 51b, 51c) ist mittels je einer Schalteinrichtung (z. B. 52a, 52b) an eine ihm fest zugeordnete Spannungsquelle 53a, 53b anschließbar. Im Gegensatz zu Fig. 2 sind die Spannungsquellen 53a, 53b einerseits nicht auf benachbarte Streckenkabel umschaltbar (z. B. 19 und 22 in Fig. 2) und andererseits nicht stets an in Richtung des Pfeils v vorlaufenden Enden, sondern z. B. abwechselnd am vorlaufenden oder am nachlaufenden Ende der Streckenkabel angeordnet, so daß z. B. die Spannungsquelle 53b das Streckenkabel 51c und die Spannungsquelle 53a das Streckenkabel 51b speist. Die übrigen Streckenkabel sind entsprechend mit Spannungsquellen und Wicklungsabschnitten verbindbar. Die Steuerung dieser und alle weiter unten beschriebenen Schalteinrichtungen erfolgt mit Hilfe der in Fig. 2 schematisch dargestellten Steuermittel 42. Zur Vereinfachung der Darstellung sind diese jedoch in Fig. 3 bis 6 jeweils nicht gesondert dargestellt.

Die Streckenkabel 51b, 51c sind analog zu Fig. 2 mittels Schalteinrichtungen 54a, 54b an die ihnen zugeordneten Wicklungsabschnitte 5.1 bis 5.9 anschließbar, wobei in Fig. 3a der Einfachheit halber für die Streckenkabel 51b, 51c stellvertretend nur je ein zugeordneter Wicklungsabschnitt 5a bzw. 5b dargestellt ist, der in weiterer Analogie zu Fig. 2 über Schalteinrichtungen 55a, 55b an je einen Sternpunkt 55c, 55d anschließbar ist. Die übrigen Streckenkabel und Wicklungsabschnitte sind in entsprechender Weise an nicht dargestellte Spannungsquellen anschließbar.

Bei einem Betrieb mit gleichmäßiger Linien- bzw. Zug- oder Fahrzeugfolge bildet das Streckenkabel 51b mit der zugehörigen Spannungsquelle 53a und dem Wicklungsabschnitt 5a einen Antriebsbereich A1, während das Streckenkabel 51c mit der Spannungsquelle 53b und dem Wicklungsabschnitt 5b einen Antriebsbereich A2 bildet. In jedem dieser in Richtung des Pfeils v hintereinander angeordneten Antriebsbereiche A1, A2 befindet sich jeweils höchstens ein einziges Fahrzeug 7a bzw. 7b. Aus diesem Grund sind die Schalteinrichtungen 52a und 52b, 54a und 54b sowie 55a und 55b bei der Durchfahrt der Fahrzeuge 7a, 7b jeweils im geschlossenen Zustand. Dabei ist der Einfachheit halber angenommen, daß alle Fahrzeuge 7a, 7b aufgrund einer gegebenen Linienfolge mit derselben Geschwindigkeit betrieben werden, daher im wesentlichen überall gleiche Abstände voneinander aufweisen und beim Überwechseln z. B. vom Antriebsbereich A1 auf den Antriebsbereich A2 keine Änderung der Programmierung für die Steuermittel 42 (Fig. 2) erforderlich ist. Die übrigen längs des Fahrwegs vorhandenen Streckenkabel, Spannungsquellen und Wicklungsabschnitte bilden entsprechend betriebene Antriebsbereiche.

Das Überwechseln der Fahrzeuge 7a, 7b von einem vorlaufenden Antriebsbereich auf einen nachfolgenden Antriebsbereich findet gemäß Fig. 3 an gedachten Bereichsgrenzen B1, B2, B3 usw. statt, die hier durch die Enden der zugehörigen Streckenkabel 51b, 51c usw. definiert sind. Damit die Fahrzeuge 7a, 7b in dem in der Zeichnung dargestellten, zwischen den Bereichsgrenzen B1, B3 befindlichen Fahrwegabschnitt mit anderen als den aus Fig. 3a ersichtlichen Abständen verkehren können, sieht die Erfindung vor, wenigstens eine Bereichsgrenze veränderbar zu gestalten und die Antriebsbereiche bei Änderung der Linienfolgen entsprechend zu verändern. Hierzu wird gemäß Fig. 3b z. B. wie folgt vorgegangen.

Es wird zunächst das betreffende Ende des Streckenkabels 51c mittels einer weiteren Schalteinrichtung 56 an die Spannungsquelle 53a anstatt an die Spannungsquelle 53b angeschlossen, wobei die Schalteinrichtung 52b (Fig. 3a) zunächst unbenutzt bleibt. Außerdem wird das Streckenkabel 51c mittels eines eingebauten Trennschalters 57 in einen ersten, der Spannungsquelle 53a zugeordneten Streckenkabelabschnitt 51c1 und einen zweiten, bis zur Bereichsgrenze B3 führenden Streckenkabelabschnitt 51c2 unterteilt, wobei der Trennschalter 57 über eine Leitung 57a an die Steuermittel 42 (Fig. 2) angeschlossen ist. Schließlich wird der zweite Streckenkabelabschnitt 51c2 über einen weiteren Streckenkabelabschnitt 58 und eine Schalteinrichtung 59, für die die Schalteinrichtung 52b nach Fig. 3a verwendet werden kann, an eine weitere, von der Spannungsquelle 53a unabhängige Spannungsquelle 60 angeschlossen, die mit der Spannungsquelle 53b in Fig. 3a übereinstimmen kann. Dadurch ergeben sich folgende Möglichkeiten.

Befindet sich der Trennschalter 57 im geschlossenen Zustand, dann definieren die beiden Streckenkabel 51b und 51c zusammen mit der Spannungsquelle 53a einen Antriebsbereich A3, in dem nur ein Fahrzeug verkehren kann, da die Spannungsquelle 53a entweder über die Schalteinrichtung 52a das Streckenkabel 51b oder über die Schalteinrichtung 56 das Streckenkabel 51c oder über die Schalteinrichtungen 52a, 56 beide Streckenkabel 51b, 51c gleichzeitig mit Strom versorgt. In dem Antriebsbereich A3 sind daher die beiden Antriebsbereiche A1, A2 mit den Bereichsgrenzen B1 und B3 nach Fig. 3a zusammengefaßt worden. Dadurch kann das Fahrzeug 7a normalerweise erst dann in den Antriebsbereich A3 einlaufen, wenn das Fahrzeug 7b diesen bereits verlassen hat. Denkbar wäre auch, im Antriebsbereich A3 mittels der Spannungsquellen 53a, 60 eine Doppelspeisung vorzunehmen, d. h. die Spannungsquelle 60 zusätzlich an das Streckenkabel 51b und/oder 51c anzuschließen.

Alternativ ist es möglich, die Antriebsbereiche A1 und A2 entsprechend Fig. 3a aufrechtzuerhalten. Hierzu werden einerseits der Trennschalter 57 und die Schalteinrichtung 59 geschlossen. Andererseits wird die Schalteinrichtung 56 geöffnet. Das Streckenkabel 51c wird jetzt durch die Spannungsquelle 60 gespeist. Unabhängig davon kann gleichzeitig das Streckenkabel 51b durch die Spannungsquelle 53a gespeist werden, indem die Schalteinrichtung 52a in ihren Schließzustand gebracht wird.

Schließlich ist es erfindungsgemäß möglich, bei Bedarf mittels der Steuermittel 42 einerseits den Trennschalter 57 zu öffnen und andererseits die Schalteinrichtungen 56 und 59 in den geschlossenen Zustand zu versetzen. In diesem Fall wird der Streckenkabelabschnitt 51c1 von der Spannungsquelle 53a und der Streckenkabelabschnitt 51c2 von der Spannungsquelle 60 gespeist. Dadurch entstehen gemäß Fig. 3b zwei voneinander unabhängige, durch eine Bereichsgrenze B4 getrennte Antriebsbereiche A3a und A3b, wobei der Antriebsbereich A3a das Fahrzeug 7a und der Antriebsbereich A3b das Fahrzeug 7b antreiben kann. Daraus folgt, daß im Gegensatz zu Fig. 3a beide Fahrzeuge 7a, 7b unabhängig voneinander längs desselben Streckenkabels 51c verkehren und dadurch dichter aneinander angenähert werden können. Der Umstand, daß dadurch gemäß Fig. 3b auch ein Antriebsbereich A3a entsteht, der länger als der entsprechende Antriebsbereich A1 in Fig. 3a ist, kann in den meisten Fällen in Kauf genommen werden, da einem (schnelleren) Fahrzeug 7a, das sich einem (langsameren) Fahrzeug 7b stärker annähert, als Fig. 3a entspricht, in der Regel ein in Fig. 3b nicht gezeigtes (langsameres) Fahrzeug folgt, das in dem in Fig. 3b gezeigten Fahrwegabschnitt einen größeren Abstand vom Fahrzeug 7a hat, als dessen aus Fig. 3a ersichtlichem Abstand vom Fahrzeug 7b entspricht.

Mit anderen Worten sieht die Erfindung vor, den aus Fig. 3a und 3b ersichtlichen Fahrwegabschnitt je nach Bedarf in gleich lange oder unterschiedlich lange Antriebsbereiche zu unterteilen. Insbesondere kann ein von einer Bereichsgrenze B1 ausgehender Antriebsbereich wahlweise bis zu einer Bereichsgrenze B2, B4 oder B3 erstreckt bzw. ein von der Bereichsgrenze B3 ausgehender Antriebsbereich A3 bzw. A3b entsprechend verkürzt oder ganz eliminiert werden. Durch Änderung der Lage des Trennschalters 57 kann außerdem die Bereichsgrenze B4 in den gegebenen Grenzen beliebig verschoben werden. Dennoch bleibt in jedem Fall das auch bisher verfolgte Prinzip erhalten, daß in jedem Antriebsbereich genau ein Fahrzeug bewegbar ist. Die Antriebsbereiche sind erfindungsgemäß aber nicht mehr fest einem bestimmten Streckenabschnitt des Fahrwegs zugeordnet, sondern in Abhängigkeit von der gewünschten Linienfolge variabel.

Die Spannungsquellen 53a, 60 nach Fig. 3b werden vorzugsweise in einem gemeinsamen Unterwerk untergebracht, in welchem Fall der dritte Streckenkabelabschnitt 58, der den von der Spannungsquelle 53a weiter entfernt liegenden, zweiten Streckenkabelabschnitt 51c2 mit der Spannungsquelle 60 verbindet, längs des Fahrwegs parallel zum ersten Streckenkabelabschnitt 51c verlegt wird.

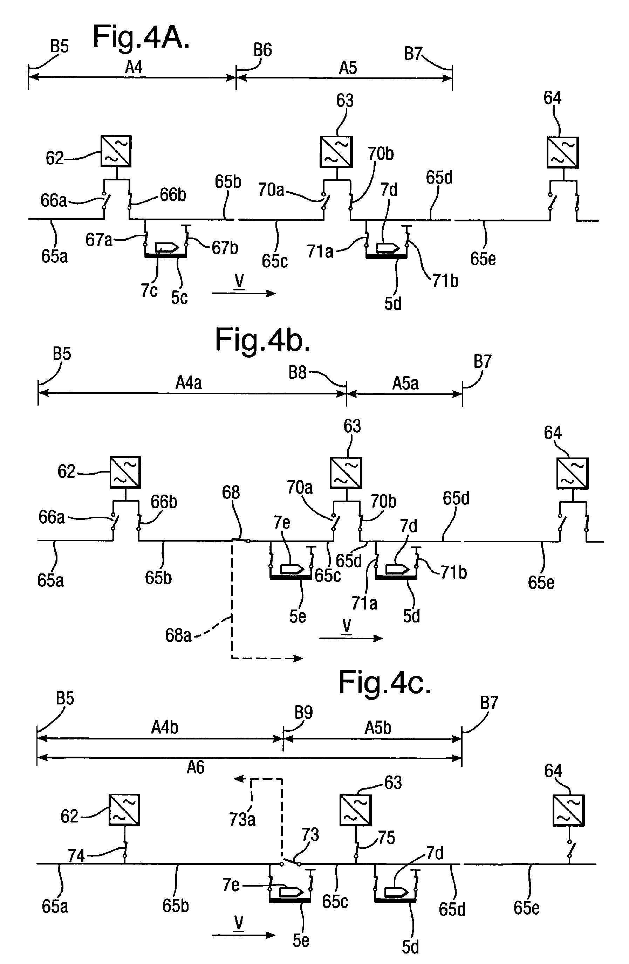

Fig. 4a und 4b zeigen ein Ausführungsbeispiel, das analog zu Fig. 3a und 3b mit Einfachspeisung betrieben wird. Dabei sind Spannungsquellen 62, 63 und 64 vorgesehen, die zwischen je zwei Streckenkabeln 65a, 65b bzw. 65c, 65d usw. angeordnet und analog zu Fig. 2 und 3b wahlweise auf eines dieser Streckenkabel 65a, 65b bzw. 65c, 65d usw. umschaltbar sind. Die Streckenkabel 65b, 65c usw. sind außerdem an ihren aneinander grenzenden, von den Spannungsquellen 62, 63 entfernten Enden getrennt. Die Spannungsquelle 62 kann mittels Schalteinrichtungen 66a, 66b zunächst mit dem Streckenkabel 65a verbunden und vom Streckenkabel 65b getrennt werden. Wenn ein Fahrzeug 7c die mit diesem verbundenen Wicklungsabschnitte passiert hat, wird die Spannungsquelle 62 an das Streckenkabel 65b angeschlossen und gleichzeitig vom Streckenkabel 65a getrennt. Dabei ist in Fig. 4a gezeigt, daß das Fahrzeug 7c gerade durch einen Wicklungsabschnitt 5c angetrieben wird, der durch eine in Schließstellung befindliche Schalteinrichtung 67a, 67b aktiviert ist.

Da die Spannungsquellen 62 bis 64 jeweils zwei verschiedene Streckenkabel mit Strom versorgen können, wird im Fall der Fig. 4a ein Antriebsbereich A4 durch je eine Spannungsquelle (z. B. 62), zwei dieser zugeordnete Streckenkabel (z. B. 65a, 65b) und die diesen zugeordneten Wicklungsabschnitte (z. B. 5c) gebildet. Für einen in Fahrtrichtung v auf den Antriebsbereich A4 folgenden Antriebsbereich A5 mit Wicklungsabschnitten 5d gilt sinngemäß dasselbe. Außerdem sind die Antriebsbereiche A4, A5 durch Bereichsgrenzen B5, B6 und B7 abgegrenzt. Wie im Beispiel der Fig. 3a ist für einen Normalbetrieb bisher vorausgesetzt, daß das Fahrzeug 7c erst in den Antriebsbereich A5 überwechseln darf, wenn ein vorausfahrendes Fahrzeug 7d den Antriebsbereich A5 verlassen hat. Das folgt daraus, daß z. B. das Streckenkabel 65c bei der in Fig. 4a gezeigten Situation nicht für den Antrieb des Fahrzeugs 7c zur Verfügung steht, solange die Spannungsquelle 63 mit dem Streckenkabel 65d verbunden ist und das Fahrzeug 7d antreibt.

Erfindungsgemäß ist vorgesehen, wenigstens zwei aneinander grenzende Streckenkabel (z. B. 65b, 65c) von zwei aufeinander folgenden Antriebsbereichen (z. B. A4, A5) durch einen Trennschalter 68 (Fig. 4b) zu verbinden, der mittels einer Leitung 68a an die Steuermittel 42 (Fig. 2) angeschlossen ist. Dadurch sind folgende zwei Betriebsweisen möglich.

Befindet sich der Trennschalter 68 im geöffneten Zustand, dann entspricht die Anordnung der nach Fig. 4a, d. h. es kann z. B. die Spannungsquelle 62 über das Streckenkabel 65b das Fahrzeug 7c und gleichzeitig die Spannungsquelle 63 über das Streckenkabel 65d das Fahrzeug 7d antreiben. Ist dagegen der Trennschalter 68 wie in Fig. 4b geschlossen, dann kann die Spannungsquelle 62 bei geschlossener Schalteinrichtung 66b über die miteinander verbundenen Streckenkabel 65b, 65c auch solche Wicklungsabschnitte 5e mit Strom versorgen, die eigentlich zum Antriebsabschnitt A5 (Fig. 4a) gehören. Voraussetzung ist nur, daß eine zwischen dem Streckenkabel 65c und der Spannungsquelle 63 befindliche Schalteinrichtung 70a in einem geöffneten Zustand ist und sich das Fahrzeug 7d nicht mehr in dem vom Streckenkabel 65c kontrollierten Bereich befindet. Gleichzeitig damit kann jedoch die Spannungsquelle 63 über eine Schalteinrichtung 70b mit dem Streckenkabel 65d verbunden sein und über weitere Schalteinrichtungen 71a, 71b wie in Fig. 4a diejenigen Wicklungsabschnitte 5d mit Strom versorgen, die dem Streckenkabel 65d zugeordnet sind.

Durch den Trennschalter 68 kann daher der Antriebsbereich A4 (Fig. 4a) in einen verlängerten Antriebsbereich A4a umgewandelt werden, während gleichzeitig der Antriebsbereich A5 (Fig. 4a) in einen verkürzten Antriebsbereich A5a umgewandelt wird. Die Bereichsgrenze B6 ist daher bis zu einer Bereichsgrenze B8 (Fig. 4b) verschoben worden. Daraus folgt, daß analog zu Fig. 3b ein Fahrzeug 7e in dem vom Streckenkabel 65c gespeisten Fahrwegabschnitt und gleichzeitig das Fahrzeug 7d in einem Fahrwegabschnitt betrieben werden kann, der vom unmittelbar nachfolgenden Streckenkabel 65d kontrolliert wird. Der Abstand der Fahrzeuge 7e, 7d kann dadurch gegenüber 4a auf mehr als die Hälfte reduziert werden.

Die in Fig. 4a, 4b nicht gezeigten Antriebsbereiche können je nach Bedarf mit oder ohne dem Trennschalter 68 entsprechende Trennschalter betrieben werden. Wie im Fall der Fig. 3b lassen sich dadurch die Antriebsbereiche an die speziellen Linienfolgen anpassen.

Fig. 4c zeigt ein Ausführungsbeispiel, das weitgehend mit dem Ausführungsbeispiel nach Fig. 4b identisch ist, weshalb gleiche Teile mit denselben Bezugszeichen versehen sind. Im Unterschied zu Fig. 4b sind hier einerseits die durch einen Trennschalter 73 verbundenen Streckenkabel 65b, 65c unterschiedlich lang, andererseits die Schalteinrichtungen 66a, 66b bzw. 70a, 70b durch je eine Schalteinrichtung 74 bzw. 75 ersetzt. Dadurch ergeben sich bei geöffnetem Trennschalter 73 zwei Antriebsbereiche A4b und A5b mit Bereichsgrenzen B5 und B9 bzw. B9 und B7, wobei in jedem Antriebsbereich A4b und A5b ein Fahrzeug 7e, 7d entsprechend Fig. 4b verkehren kann, sofern die Schalteinrichtungen 74, 75 geschlossen sind. Befindet sich dagegen der Trennschalter 73 im geschlossenen Zustand, dann bildet der gesamte, zwischen den Bereichsgrenzen B5, B7 liegende Fahrwegabschnitt einen für besonders große Fahrzeugabstände geeigneten Antriebsbereich A6, so daß in diesem Fall nur eine der Schalteinrichtungen 74, 75 geschlossen sein braucht, sofern keine Doppelspeisung gewünscht ist. Ein Unterschied zu Fig. 4b ergibt sich hier dadurch, daß das Fahrzeug 7d bei geöffneten Trennschalter 73 auch in einem vom Streckenkabel 65c kontrollierten und damit vor der Spannungsquelle 63 liegenden Teil des Antriebsbereichs A5b betrieben werden und daher das Fahrzeug 7e noch dichter als in Fig. 4b an das Fahrzeug 7d herangefahren werden könnte.

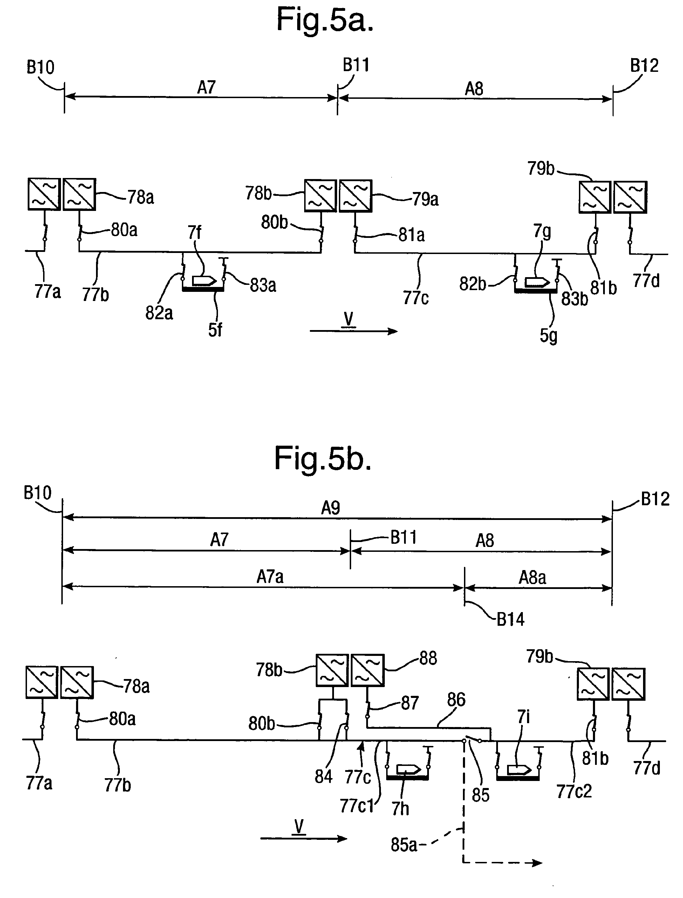

Fig. 5a und 5b zeigen ein dem Ausführungsbeispiel nach Fig. 3b ähnliches, jedoch mit Doppelspeisung arbeitendes Ausführungsbeispiel. In Fig. 5a sind entsprechend der bisherigen Betriebsweise hintereinander z. B. vier Streckenkabel 77a bis 77d vorhanden. Jedes Streckenkabel 77b, 77c ist an seinen Enden mit zwei fest zugeordneten Spannungsquellen 78a, 78b bzw. 79a, 79b verbunden. Jedes Streckenkabel (z. B. 77b, 77c) bildet außerdem mit zwei angeschlossenen Spannungsquellen (z. B. 78a, 78b bzw. 79a, 79b) und zugehörigen Wicklungsabschnitten (5f, 5g) jeweils einen Antriebsbereich A7 bzw. A8, in dem jeweils nur ein einziges Fahrzeug 7f bzw. 7g fahren kann, sofern die Streckenkabel 77b, 77c einerseits über Schalteinrichtungen 80a, 80b bzw. 81a, 81b mit den zugeordneten Spannungsquellen 78a, 78b bzw. 79a, 79b usw. verbunden und andererseits über Schalteinrichtungen 82a, 83a bzw. 82b, 83b die zugehörigen Wicklungsabschnitte 5f, 5g usw. aktiviert sind. Bereichsgrenzen B10 bis B 12 entsprechen hier den Lagen von Unterwerken od. dgl., in denen die Spannungsquellen 78a bzw. 78b, 79a bzw. 79b paarweise untergebracht sind bzw. in denen die Streckenkabel 77b, 77c usw. enden.

Zur erfindungsgemäßen Änderung der durch die Antriebsbereiche A7 und A8 festgelegten Fahrzeugabstände dient die Vorrichtung nach Fig. 5b. Es wird hier zunächst analog zu Fig. 3b das eine Ende des Streckenkabels 77c mittels einer weiteren Schalteinrichtung 84 an die Spannungsquelle 78b anstatt die Spannungsquelle 79a angeschlossen. Außerdem wird das Streckenkabel 77c mittels eines eingebauten Trennschalters 85 in einen ersten, der Spannungsquelle 78b zugeordneten Streckenkabelabschnitt 77c1 und einen zweiten, der Spannungsquelle 79b zugeordneten Streckenkabelabschnitt 77c2 unterteilt, wobei der Trennschalter 85 über eine Leitung 85a an die Steuermittel 42 (Fig. 2) angeschlossen wird. Schließlich wird der zweite Streckenkabelabschnitt 77c2 über einen dritten Streckenkabelabschnitt 86 und eine Schalteinrichtung 87 an eine weitere, von der Spannungsquelle 78b unabhängige Spannungsquelle 88 angeschlossen, wozu die Schalteinrichtung 81a und die Spannungsquelle 79a nach Fig. 5a verwendet werden könnten. Dadurch ergeben sich folgende Möglichkeiten.

Befindet sich der Trennschalter 85 im geschlossenen Zustand und die Schalteinrichtung 87 im geöffneten Zustand, dann können die beiden Streckenkabel 77b und 77c zusammen mit den Spannungsquellen 78a, 78b und/oder 79b einen Antriebsbereich A9 mit den Bereichsgrenzen B10 und B12 gemäß Fig. 5a definieren. Da die Spannungsquelle 78b dabei über die Schalteinrichtung 80b an das Streckenkabel 77b bzw. über die Schalteinrichtung 84 an das Streckenkabel 77c angeschlossen ist, könnte im Antriebsbereich A9 ohne Verlust der Doppelspeisung nur ein einziges Fahrzeug verkehren.

Alternativ ist es möglich, die Antriebsbereiche A7 und A8 entsprechend Fig. 5a aufrechtzuerhalten. Hierzu wird einerseits der Trennschalter 85 geschlossen, andererseits die Schalteinrichtung 84 geöffnet. Das Streckenkabel 77c kann dann durch die beiden Spannungsquellen 88 und 79b und unabhängig davon bei geschlossenen Schalteinrichtungen 80a, 80b gleichzeitig das Streckenkabel 77b durch die Spannungsquellen 78a und 78b gespeist werden.

Wird schließlich der Trennschalter 85 erfindungsgemäß in den geöffneten Zustand und die Schalteinrichtung 87 in den geschlossenen Zustand gebracht, dann können zwei voneinander unabhängige Antriebsbereiche A7a und A8a geschaffen werden. Der Antriebsbereich A7a enthält das Streckenkabel 77b und den Streckenkabelabschnitt 77c1. Er entsteht durch Schließen der Schalteinrichtungen 80a, 80b und 84 und reicht bis zu einer vom Trennschalter 85 definierten Bereichsgrenze B14. Die gewünschte Doppelspeisung erfolgt durch die Spannungsquellen 78a und 78b. Der Antriebsbereich A8a enthält dagegen nur den Streckenkabelabschnitt 77c2, der aber bei geschlossenen Schalteinrichtungen 87 und 81b ebenfalls von zwei Spannungsquellen 88, 79b gespeist wird. Daher ist es mittels des Trennschalters 85 möglich, in dem in Fig. 5a, 5b dargestellten Fahrwegabschnitt für einen von der Bereichsgrenze B10 ausgehenden Antriebsbereich drei unterschiedliche Bereichsgrenzen B11, B14 und B12 vorzusehen. Außerdem können sich zwei Fahrzeuge 7h, 7i theoretisch so weit aneinander annähern, wie durch die Lage des Trennschalters 85 festgelegt ist. Allerdings kann auch hier das Fahrzeug 7h erst dann in den Antriebsbereich A8a einfahren, nachdem das Fahrzeug 7i diesen verlassen hat.

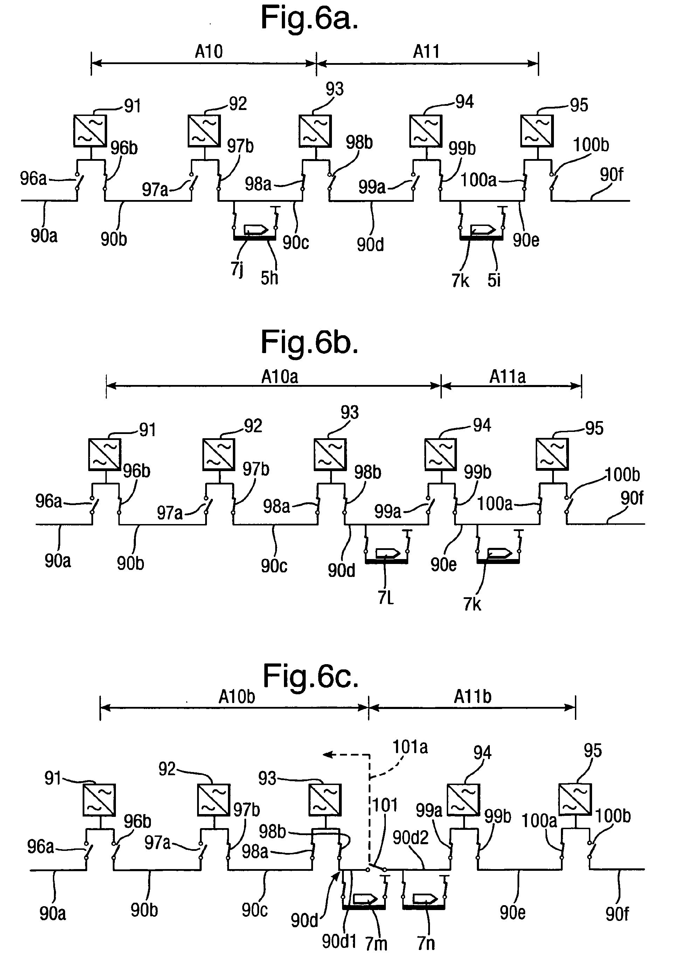

Schließlich zeigen Fig. 6a bis 6c zwei weitere Ausführungsbeispiele, die analog zu Fig. 5a und 5b eine Doppelspeisung vorsehen. Dabei sind wiederum gleiche Teile mit denselben Bezugszeichen versehen.

Nach Fig. 6a sind beispielsweise sechs in Richtung des Fahrwegs hintereinander angeordnete Streckenkabel 90a bis 90f und fünf Spannungsquellen 91 bis 95 dargestellt, die mit Schalteinrichtungen 96a, 96b usw. bis 100a, 100b an die Streckenkabel 90a bis 90f angeschlossen werden können. Befinden sich z. B. die Schalteinrichtungen 97b, 98a sowie 99b, 100a entsprechend Fig. 6a im geschlossenen Zustand, während alle anderen Schalteinrichtungen im geöffneten Zustand sind, dann werden die Streckenkabel 90c und 90e mit Strom versorgt, so daß Fahrzeuge 7j und 7k entsprechend der oben beschriebenen Funktion mit Doppelspeisung betrieben werden können. Beachtlich dabei ist, daß z. B. die Streckenkabel 90b und 90d momentan keine weiteren Fahrzeuge antreiben können, weil die ihnen zugeordneten Spannungsquellen 91 bis 94 für sie nicht zur Verfügung stehen.

Entsprechend den bereits beschriebenen Ausführungsbeispielen bilden in dem dargestellten Zustand einerseits die Spannungsquellen 91, 92 und 93 mit den ihnen zugeordneten Streckenkabeln 90b und 90c und zugehörigen Wicklungsabschnitten 5h einen ersten Antriebsbereich A10, während andererseits die Spannungsquellen 93, 94 und 95 mit den zugeordneten Streckenkabeln 90d und 90e und an diese anschließbaren Wicklungsabschnitten 5i einen zweiten Antriebsbereich A11 bilden. Gelangen die Fahrzeuge 7j und 7k später in den Bereich der (nicht dargestellten) Wicklungsabschnitte, die mit den Streckenkabeln 90d bzw. 90f verbunden sind, werden die Schalteinrichtungen 97b, 98a, 99b, 100a geöffnet und statt dessen die Schalteinrichtungen 98b, 99a und 100b geschlossen, so daß jetzt die Streckenkabel 90d und 90f mit Strom versorgt werden. Wie bei den vorher beschriebenen Ausführungsbeispielen kann aber das Fahrzeug 7j erst in den Antriebsbereich A11 einfahren, wenn das Fahrzeug 7k diesen Antriebsbereich A11 verlassen hat und dadurch die Spannungsquelle 94 für das Fahrzeug 7j verfügbar ist.

Fig. 6b zeigt demgegenüber die erfindungsgemäße Steuerung der Schalteinrichtungen an einem derzeit für am besten gehaltenen Ausführungsbeispiel. Hiernach sind z. B. die Schalteinrichtungen 97b, 98a und 98b einerseits und die Schalteinrichtungen 99b, 100a andererseits im geschlossenen Zustand, während die übrigen Schalteinrichtungen im geöffneten Zustand sind. Das hat zur Folge, daß jetzt die aufeinander folgenden Streckenkabel 90c und 90d von den Spannungsquellen 92 und 93 gespeist werden und dem Streckenkabel 90e von den Spannungsquellen 94 und 95 Strom zugeführt wird. Daher erscheint ein Antriebsbereich A10a in Fig. 6b gegenüber dem Antriebsbereich 10 in Fig. 6a um die Länge des Streckenkabels 90d vergrößert, während gleichzeitig ein Antriebsbereich A11a der Fig. 6b gegenüber dem Antriebsbereich A11 nach Fig. 6a um dieselbe Länge verkürzt ist. Dadurch kann sich ein Fahrzeug 71 in Fig. 6b dem an derselben Stelle wie in Fig. 6a befindlichen Fahrzeug 7k stärker als in Fig. 6a annähern. Wie in den anderen Ausführungsbeispielen wird dies mit anderen Worten dadurch ermöglicht, daß eine Bereichsgrenze B15 des Antriebsbereichs A10 (Fig. 6a) bis zu einer Bereichsgrenze B16 des Antriebsbereichs A10a (Fig. 6b) verschoben wurde, ohne daß hierfür die Doppelspeisung aufgegeben werden muß. Ein besonderer Vorteil dieses Ausführungsbeispiels besteht im übrigen darin, daß zu seiner Realisierung, wie ein Vergleich mit Fig. 6a zeigt, keinerlei zusätzliche Hardwarekomponenten benötigt werden.

Eine entsprechende Funktion ist mit dem Ausführungsbeispiel nach Fig. 6c möglich, in der gleiche Teile mit denselben Bezugszeichen wie in Fig. 6a versehen sind. Im Gegensatz zu Fig. 6b ist hier das Streckenkabel 90d durch einen mit einer Leitung 101a an die Steuermittel 42 angeschlossenen Trennschalter 101 in einen ersten, über die Schalteinrichtung 98b an die Spannungsquelle 93 angeschlossenen Streckenkabelabschnitt 90d1 und einen zweiten, über die Schalteinrichtung 99a an die Spannungsquelle 94 angeschlossenen Streckenkabelabschnitt 90d2 unterteilt. Ist der Trennschalter 101 geschlossen, dann entspricht Fig. 6c hinsichtlich Anordnung und Funktion im wesentlichen der Fig. 6a, d. h. ein im Antriebsbereich A10 befindliches Fahrzeug kann erst dann in den Antriebsbereich A11 einfahren, wenn sich in diesem kein weiteres Fahrzeug mehr befindet. Außerdem könnte mit der Vorrichtung nach Fig. 6c auch das in Fig. 6b dargestellte Beispiel realisiert werden. Ist der Trennschalter 101 dagegen im geöffneten Zustand, dann kann einerseits der Streckenkabelabschnitt 90d1 durch Schließen der Schalteinrichtungen 98b, 98a und 97b an die Spannungsquellen 93 und 92 und andererseits der Streckenkabelabschnitt 90d2 durch Schließen der Schalteinrichtungen 99a, 99b und 100a an die Spannungsquellen 94 und 95 angeschlossen werden. Dies ermöglicht es, im Extremfall, d. h. bei dichtester Annäherung, auf den beiden voneinander unabhängigen Streckenkabelabschnitten 90d1 und 90d2 je ein Fahrzeug 7m und 7n verkehren zu lassen. Auch in diesem Fall erscheint ein Antriebsbereich A10b gegenüber dem Antriebsbereich A10 nach Fig. 6a verlängert und entsprechend ein Antriebsbereich A11b gegenüber dem Antriebsbereich A11 nach Fig. 6a verkürzt. Mit anderen Worten ist eine Verschiebung der Bereichsgrenze B15 (Fig. 6a) um die Länge des Streckenkabelabschnitts 90d1 bis zu einer Bereichsgrenze B17 (Fig. 6c) eingetreten, deren Lage durch den Trennschalter 101 definiert ist. Wie bei den Ausführungsbeispielen nach Fig. 5b und 6b erfolgt die Veränderung der Bereichsgrenzen B15, B17 ohne Verlust der Doppelspeisung. Eine vergleichbare Funktion kann erreicht werden, wenn die Schalteinrichtungen 98b, 99b entfallen und die Streckenkabelabschnitte 90d1 und 90d2 mit dem Streckenkabel 90e fest verbunden werden. Dies kommt insbesondere dann in Betracht, wenn das Streckenkabel 90d über mehrere - nicht dargestellte - Trennschalter 101 in Streckenkabelabschnitte 90d1 und 90d2 beliebiger Längenverhältnisse aufgeteilt werden kann, so daß die Grenze B17 auf diese Weise beliebig zwischen den Spannungsquellen 93 und 94 verschoben werden kann. Die Schalteinrichtungen 98b und 99b werden somit ersetzt durch einen Trennschalter 101, der sich in der Nähe der Spannungsquelle 93 bzw. 94 befindet.

Ein Vergleich der Fig. 3a, 4a, 5a und 6b mit den übrigen Figuren zeigt, daß die Erfindung unter Anwendung der auch bisher bereits vorgesehenen Spannungsquellen und in allen Ausführungsbeispielen ohne Verlust an Schubkraft bzw. an zuführbarer Antriebsleistung für die Fahrzeuge realisiert werden kann. Auch die Schalteinrichtungen sind ohne wesentliche Änderungen anwendbar. Daher kann die Anpassung an unterschiedliche Linienfolgen mit verhältnismäßig geringem Aufwand an Hardware und/oder Software durchgeführt werden.

Schließlich kann die beschriebene Verschiebung der Bereichsgrenzen B je nach Bedarf auch bei einer Mehrzahl von ausgewählten, längs des Fahrwegs vorhandenen Antriebsbereichen A vorgesehen werden, wobei die Mehrzahl auch alle längs des Fahrwegs vorhandenen Antriebsbereiche umfassen kann. Im Idealfall können daher längs des gesamten Fahrwegs veränderbare Bereichsgrenzen vorgesehen und die Linienfolgen daher je nach Bedarf gleich oder unterschiedlich gewählt werden.

Die Erfindung ist nicht auf die beschriebenen Ausführungsbeispiele beschränkt, die auf vielfache Weise abgewandelt werden können. Insbesondere können zur Vermeidung von Schubkraftverlusten beim Überfahren von Wechselstellen zwischen den einzelnen Wicklungsabschnitten alle bisher für diese Zwecke bekannten Maßnahmen angewendet werden, die z. B. als Bocksprung-, Wechselschritt-, Dreischritt- oder Vierschrittverfahren bekannt sind (z. B. elektrotechnische Zeitschrift etz, Bd. 108, 1987, Heft 9, Seiten 378 bis 381, DE 199 22 441 A1, DE 102 27 253 A1). Ähnliche Maßnahmen könnten beim Umschalten der Streckenkabel vorgesehen werden. Auch die beschriebenen Schalteinrichtungen und Steuermittel sowie die angegebenen Festlegungen für die verschiedenen Antriebsbereiche bzw. Antriebsbereichabschnitte können anders als beschrieben sein. Weiter ist es möglich, zumindest bei der Vorrichtung nach Fig. 3b, mehrere Trennschalter 57 und Spannungsquellen 60 vorzusehen, um den Antriebsbereich A2 in mehr als zwei voneinander unabhängige Teilbereiche zu unterteilen. Abgesehen davon ist klar, daß längs des Fahrwegs beliebig viele Antriebsbereiche in der beschriebenen Weise variabel ausgebildet werden können. Weiter kann in Fig. 5b die weitere Spannungsquelle 88 in dem Unterwerk angeordnet werden, in dem auch die Spannungsquelle 79b untergebracht ist, und der dritte Streckenkabelabschnitt 86 parallel zum Streckenkabelabschnitt 77c2 verlegt werden. Werden die Fahrzeuge 7 entsprechend Fig. 2 mit zwei oder mehr Linearantrieben angetrieben, kann weiterhin jeder beteiligte Linearantrieb entsprechend Fig. 3b, 4b, 4c, 5b, 6b oder 6c ausgebildet sein, weshalb in den Zeichnungen jeweils nur ein Linearantrieb dargestellt wurde. In einem oder mehreren Streckenkabelabschnitten können mehrere Trennvorrichtungen vorgesehen werden, so daß im Extremfall zwei Fahrzeuge in zwei aufeinander folgenden Langstatorwicklungsabschnitten 5.1 bis 5.9 hintereinander her fahren können, indem die Bereichsgrenze B synchron hinter dem ersten Fahrzeug nach Verlassen des Wicklungsabschnitts um diesen Wicklungsabschnitt mit verschoben wird. Schließlich versteht sich, daß die verschiedenen Merkmale auch in anderen als den beschriebenen und dargestellten Kombinationen angewendet werden können.

## Patentansprüche

1. Vorrichtung mit wenigstens einem Langstator-Linearantrieb zum Betreiben von Magnetschwebefahrzeugen (7), enthaltend: wenigstens eine längs eines Fahrwegs verlegte, in Wicklungsabschnitte (5.1 bis 5.9, 26.1 bis 26.9) unterteilte Wechselstromwicklung (5, 26), eine an dem Fahrzeug (7) montierte Erregeranordnung (6), längs des Fahrwegs angeordnete Streckenkabel (51; 65; 77; 90), längs des Fahrwegs mit Abstand angeordnete Spannungsquellen (53; 62 bis 64; 78, 79; 91 bis 95), Schalteinrichtungen (52, 54, 55; 66, 67, 71; 80 bis 83; 96 bis 100) und an diese angeschlossene Steuermittel (42) zum nacheinander erfolgenden Anschluß der Wicklungsabschnitte (5.1 bis 5.9, 26.1 bis 26.9) an zugeordnete Streckenkabel (51; 65; 77; 90) und Spannungsquellen (53; 62 bis 64; 78, 79; 91 bis 95) entsprechend der Fortbewegung der Fahrzeuge (7), wobei in Richtung des Fahrwegs aufeinander folgende, aus zugeordneten Wicklungsabschnitten (5.1 bis 5.9, 26.1 bis 26.9), Streckenkabeln (51; 65; 77; 91) und Spannungsquellen (53; 62 bis 64; 78, 79; 91 bis 95) gebildete, durch Bereichsgrenzen (B) gegeneinander abgegrenzte Antriebsbereiche (A) vorgesehen sind, in denen nur je ein Fahrzeug (7) betreibbar ist, **dadurch gekennzeichnet, daß** wenigstens ein Antriebsbereich (A) zur Ermöglichung von unterschiedlichen Linienfolgen für die Fahrzeuge (7) bzw. Abständen zwischen den Fahrzeugen (7) mit wenigstens einer veränderbar ausgebildeten Bereichsgrenze (B) versehen ist.

2. Vorrichtung nach Anspruch 1, **dadurch gekennzeichnet, daß** die Bereichsgrenze (B15) mittels der Schalteinrichtungen (96a bis 100a) veränderbar ist.

3. Vorrichtung nach Anspruch 1 oder 2, **dadurch gekennzeichnet, daß** die Bereichsgrenze mittels wenigstens eines, in ein Streckenkabel (51c; 65b, 65c; 77c; 90d) eingebauten Trennschalters (57; 68; 73; 85; 101) veränderbar ist.

4. Vorrichtung nach einem der Ansprüche 1 bis 3, **dadurch gekennzeichnet, daß** wenigstens ein durch eine erste Bereichsgrenze (B3) definierter Antriebsbereich (A2) vorhanden ist, der ein Streckenkabel (51c) und eine diesem zugeordnete Spannungsquelle (53a) aufweist, wobei das Streckenkabel (51c) durch wenigstens einen, eine zweite Bereichsgrenze (B4) definierenden Trennschalter (57) in einen der Spannungsquelle (53a) zugeordneten ersten Streckenkabelabschnitt (51c1) und einen zweiten, an eine von der Spannungsquelle (53a) unabhängige weitere Spannungsquelle (60) anschließbaren Streckenkabelabschnitt (59c2) unterteilbar ist.

5. Vorrichtung nach Anspruch 4, **dadurch gekennzeichnet, daß** die beiden Spannungsquellen (53a, 60) in einem gemeinsamen Unterwerk untergebracht sind und ein vom Unterwerk entfernter Streckenkabelabschnitt (59c2) mittels eines dritten Streckenkabelabschnitts (58) mit der weiteren Spannungsquelle (60) verbunden ist.

6. Vorrichtung nach einem der Ansprüche 1 bis 3, **dadurch gekennzeichnet, daß** wenigstens ein erster und ein diesem in Fahrtrichtung folgender, zweiter Antriebsbereich (A4, A5) vorgesehen sind, die je eine Spannungsquelle (62, 63) und zwei wahlweise an diese anschließbare Streckenkabel (65a, 65b; 65c, 65d) aufweisen, wobei zwei in Fahrtrichtung aufeinander folgende Streckenkabel (65b, 65c) der beiden Antriebsbereiche (A4, A5) durch einen Trennschalter (68; 73) miteinander verbunden und die Steuermittel (42) derart eingerichtet sind, daß durch Schließen bzw. Öffnen des Trennschalters (68, 73) und Betätigung der Schalteinrichtungen (66a, 66b; 70a, 70b; 74, 75) unterschiedliche Bereichsgrenzen für die Antriebsbereiche (A4, A5) herstellbar sind.

7. Vorrichtung nach Anspruch 6, **dadurch gekennzeichnet, daß** die durch den Trennschalter (73) verbundenen Streckenkabel (65b, 65c) unterschiedlich lang sind.

8. Vorrichtung nach einem der Ansprüche 1 bis 3, **dadurch gekennzeichnet, daß** wenigstens zwei in Fahrtrichtung aufeinander folgende, eine erste Bereichsgrenze (B11) definierende Antriebsbereiche (A7, A8) vorhanden sind, die je ein Streckenkabel (77b; 77c) und zwei diesen zugeordnete Spannungsquellen (78a, 78b; 78b, 79b) aufweisen, wobei zumindest das Streckenkabel (77c) des einen Antriebsbereichs (A8) durch wenigstens einen, eine zweite Bereichsgrenze (B 14) definierenden, an die Steuermittel (42) angeschlossenen Trennschalter (85) in zwei Streckenkabelabschnitte (77c1, 77c2) unterteilt ist und wobei die Steuermittel (42) so eingerichtet sind, daß mittels der Schalteinrichtungen (80, 81, 84, 87) bei geschlossenem Trennschalter (85) die beiden Streckenkabelabschnitte (77c1, 77c2) an beide zugeordnete Spannungsquellen (78b, 79b) angeschlossen sind, bei geöffnetem Trennschalter (85) dagegen der eine Streckenkabelabschnitt (77c1) an eine erste (78b) der zugeordneten Spannungsquellen und eine Spannungsquelle (78a) des anderen Antriebsbereichs (A7) und der andere Streckenkabelabschnitt (77c2) an eine zweite (79b) der zugeordneten Spannungsquellen und an eine weitere, der Veränderung der Bereichsgrenze (B11) dienende Spannungsquelle (88) anschließbar ist.

9. Vorrichtung nach Anspruch 8, **dadurch gekennzeichnet, daß** die erste Spannungsquelle (78b) und die weitere Spannungsquelle (88) in einem gemeinsamen Unterwerk untergebracht sind und ein vom Unterwerk ferner Streckenkabelabschnitt (77c2) mittels eines dritten Streckenkabelabschnitts (86) an die weitere Spannungsquelle (88) anschließbar ist.

10. Vorrichtung nach einem der Ansprüche 1 bis 3, **dadurch gekennzeichnet, daß** die zwei in Fahrtrichtung aufeinander folgenden Antriebsbereiche (A10, A11) je zwei hintereinander angeordnete Streckenkabel (90b, 90c; 90d, 90e) und je drei zugeordnete, jeweils paarweise an die Streckenkabel (90b, 90c; 90d, 90e) anschließbare Spannungsquellen (91 bis 93; 93 bis 95) aufweisen und daß die Steuermittel (42) und die Schalteinrichtungen (96 bis 99) so eingerichtet sind, daß zur Änderung einer ersten, von den Antriebsbereichen (A10, A11) definierten Bereichsgrenze (B 15) eines der beiden Streckenkabel (90d) des eines Antriebsbereichs (A11) von einer zugeordneten Spannungsquelle (94) dieses Antriebsbereichs (A11) trennbar und gleichzeitig mit einem angrenzenden Streckenkabelabschnitt (90c) des anderen der beiden Antriebsbereiche (A10) verbindbar ist.

11. Vorrichtung nach einem der Ansprüche 1 bis 3, **dadurch gekennzeichnet, daß** wenigstens zwei in Fahrtrichtung aufeinander folgende Antriebsbereiche (A10, A11) je zwei hintereinander liegende Streckenkabel (90b, 90c; 90d, 90e) und je drei, jeweils paarweise an die Streckenkabel (90b, 90c; 90d, 90e) anschließbare Spannungsquellen (91 bis 93; 93 bis 95) aufweisen, wobei wenigstens ein Antriebsbereich (A11) ein Streckenkabel (90d) aufweist, das durch einen eingebauten, an die Steuermittel (42) angeschlossenen Trennschalter (101) in zwei, an je eine zugeordnete der Spannungsquellen (93, 94) anschließbare Streckenkabelabschnitte (90d1; 90d2) unterteilt ist, und wobei die Steuermittel (42) und die Steuereinrichtungen (90b bis 100a) so eingerichtet sind, daß bei geöffnetem Trennschalter (101) jeder Streckenkabelabschnitt (90d1, 90d2) an die zugeordnete Spannungsquelle (93, 94) und über je ein Streckenkabel (90c, 90e) eines der beiden Antriebsbereiche (A10, A11) zusätzlich an eine in Fahrtrichtung vor bzw. hinter ihm liegenden Spannungsquelle (92 bzw. 95) anschließbar ist.
